**Europäisches Patentamt**

**European Patent Office**

**Office européen des brevets**

(11) Numéro de publication : **0 483 337 B1**

(12) **FASCICULE DE BREVET EUROPEEN**

(45) Date de publication du fascicule du brevet :
**05.10.94 Bulletin 94/40**

(51) Int. Cl.$^5$ : **F16L 11/127**

(21) Numéro de dépôt : **91910268.1**

(22) Date de dépôt : **17.05.91**

(86) Numéro de dépôt international :
**PCT/FR91/00403**

(87) Numéro de publication internationale :
**WO 91/18231 28.11.91 Gazette 91/27**

(54) **CONDUITE TUBULAIRE FLEXIBLE COMPORTANT DES MOYENS DE CHAUFFAGE INCORPORES.**

(30) Priorité : **17.05.90 FR 9006186**

(43) Date de publication de la demande :
**06.05.92 Bulletin 92/19**

(45) Mention de la délivrance du brevet :
**05.10.94 Bulletin 94/40**

(84) Etats contractants désignés :
**BE DE DK ES GB GR IT NL SE**

(56) Documents cités :
**DE-U- 8 336 648
FR-A- 2 423 707
FR-A- 2 563 608
US-A- 3 853 149**

(73) Titulaire : **COFLEXIP
88, avenue du Général-Leclerc
F-92100 Boulogne-Billancourt (FR)**

(72) Inventeur : **LEQUEUX, Jean-Michel
6, rue de Sully
F-78110 Le-Vésinet (FR)**

(74) Mandataire : **Leszczynski, André
CABINET NONY & CIE.
29 rue Cambacérès
F-75008 Paris (FR)**

EP 0 483 337 B1

## Description

La présente invention est relative à une conduite tubulaire flexible comportant des moyens de chauffage incorporés et plus précisément une conduite tubulaire flexible pour le transport de fluides liquides et/ou gazeux sous pression, dans laquelle la température du fluide à la sortie de la conduite doit être maintenue sensiblement égale à la température d'entrée malgré les inévitables échanges thermiques avec un milieu ambiant relativement froid ou dans laquelle la chute de température du fluide transporté entre l'entrée et la sortie de la conduite doit être limitée à une valeur relativement faible.

A titre d'exemples d'application de conduites selon l'invention, on peut citer les conduites tubulaires flexibles utilisées pour le transport des hydrocarbures dans les installations de production pétrolière, notamment les installations de production sous-marines (off-shore) ou les conduites de transport d'hydrocarbures, notamment en zone Arctique où il est nécessaire de chauffer en permanence la conduite ou bien assurer un réchauffage du fluide transporté par exemple pour reprendre l'écoulement après un arrêt ayant provoqué un gel du liquide transporté.

Les conduites flexibles au sens de l'invention ne sont bien entendu pas limitées au transport d'hydrocarbures mais peuvent également être utilisées pour le transport de produits divers tels que des produits naturels devant être maintenus à une température plus ou moins élevée tels que des produits oléagineux, les conduites pouvant également être utilisées dans d'autres applications, par rexemple comme tuyaux de prélèvement d'échantillons dans l'industrie du raffinage ou plus généralement dans l'industrie chimique.

Les conduites tubulaires flexibles selon l'invention sont du type comportant une gaine tubulaire externe souple de protection, un ensemble d'armatures de renforcement, un tube ou une gaine tubulaire interne souple et, le cas échéant, au moins une gaine tubulaire souple intermédiaire, et comportent des moyens de chauffage sous la forme de fils électriquement conducteurs raccordés à une source d'énergie électrique et dégageant de la chaleur par effet Joule, lesdits fils étant disposés sur la longueur de la conduite.

On connaît déjà de nombreux exemples de réalisations de conduites tubulaires flexibles utilisant des conducteurs électriques noyés dans des structures isolantes telles qu'un matériau élastomérique ou des fils métalliques conducteurs gainés disposés le long de la conduite.

Les solutions connues donnent une satisfaction relative pour des conduites de courte longueur ne nécessitant pas de caractéristiques mécaniques élevées mais ne sont pas appropriées notamment pour le transport de fluides tels que des hydrocarbures à des pressions élevées et/ou à une profondeur élevée avec des tronçons de conduites de grande longueur, notamment supérieure à 1000 m.

Les conduites à cet effet doivent en particulier avoir des caractéristiques mécaniques élevées notamment de résistance à la traction, à l'écrasement et à la pression interne du fluide transporté.

En outre, les conducteurs noyés dans un matériau élastomérique, ou gainés, que l'on trouve dans les conduites chauffantes connus ont des sections de métal relativement faibles et présentent l'inconvénient d'être limités en terme de flux de chaleur pouvant être émis et de longueur de tronçon de conduite continu possible, ainsi que l'inconvénient de fonctionner à une température des conducteurs relativement élevée, avec de mauvaises caractéristiques de répartition et de transmission de la chaleur au fluide transporté.

La société déposante a déjà proposé de réaliser un chauffage du fluide transporté dans de telles conduites et a ainsi décrit dans son brevet français FR-A-2 423 707 une conduite comportant des fils gainés de chauffage incorporés dans des profilés métalliques en forme de caissons creux interposés entre les fils métalliques pleins constituant une armature de résistance à la traction de la conduite.

Néanmoins, cette solution qui permet de réaliser une conduite flexible chauffante à caractéristiques mécaniques élevées présente l'inconvénient que la puissance de chauffage que l'on peut obtenir est relativement limitée notamment en raison de la surface de dissipation thermique faible des conducteurs. La longueur maximale de chaque tronçon est relativement faible, dans la pratique, limitée à 1000 m, et la fabrication et la mise en place de profilés creux particuliers augmente de manière non négligeable le coût de fabrication de la conduite tubulaire flexible.

On connaît par DE-U-83 36 648 dont les caractéristiques font l'objet du préambule de la revendication 1, une conduite tubulaire flexible pour le transport de fluides sous pression comportant un ensemble d'armatures de renforcement, des gaines tubulaires souples, et des moyens de chauffage sous la forme d'une pluralité de fils électriquement conducteurs, parallèles entre eux, enroulés en spires autour de l'axe de la conduite, et disposés selon au moins une nappe entre deux gaines tubulaires souples de la conduite.

La présente invention se propose de réaliser une conduite tubulaire flexible permettant de transmettre au fluide transporté un flux de chaleur sensiblement plus important et bien réparti autour de la conduite et de réaliser des conduites de longueur continue beaucoup plus grande sans connexion électrique intermédiaire indépendamment des raccordements aux deux extrémités de chaque tronçon de conduite.

La conduite tubulaire flexible selon l'invention se caractérise essentiellement par le fait que lesdits fils conducteurs sont non jointifs entre eux avec un jeu latéral entre les fils compris entre 1 et 20 %, de préférence entre 3 et 12 %, lesdits fils étant chacun en appui par un contact de surface sur une gaine tubulaire sous-jacente électriquement isolante.

On réalise ainsi selon l'invention au moins une nappe chauffante ou plus précisément, comme cela sera expliqué plus loin, des secteurs chauffants constitués de fils conducteurs disposés côte à côte avec un certain jeu fonctionnel latéral et présentant des surfaces de dissipation thermique importantes au contact de la gaine sous-jacente, et donc en direction du fluide transporté à l'intérieur de la conduite flexible.

De manière à augmenter la surface de dissipation thermique, chacun des fils conducteurs est avantageusement un profilé métallique non gainé, avantageusement de section pleine et de forme non circulaire, par exemple ovale, elliptique, méplate ou polygonale, en particulier rectangulaire de section aplatie.

Les fils conducteurs de la ou de chaque nappe peuvent être simplement disposés entre les surfaces en regard des gaines entre lesquelles ils sont mis en place ou en variante être logés dans des rainures de sections correspondantes formées dans l'une au moins des faces des gaines en regard.

Cette réalisation permet notamment d'utiliser des fils de section circulaire ou d'une section proche de la section circulaire tout en assurant une surface de transfert thermique élevée vers la couche sous-jacente.

Les fils conducteurs sont reliés à une source d'énergie électrique à l'une des extrémités, ou éventuellement à chacune des deux extrémités, la connexion se faisant par des conducteurs de raccordement qui traversent l'embout monté à ladite extrémité ou le cas échéant les deux embouts.

L'alimentation électrique des fils conducteurs de la conduite tubulaire flexible selon l'invention peut s'effectuer de préférence en courant continu ou en courant alternatif triphasé.

Dans un premier mode de mise en oeuvre avec une alimentation en courant continu, il est prévu une nappe unique de fils conducteurs. Plusieurs variantes de réalisation sont alors possibles.

Dans une première variante de réalisation, la nappe est subdivisée en deux secteurs de fils réalisés en un même matériau conducteur et de même section, les secteurs s'étendant chacun sensiblement sur 180°, les fils de chacun des secteurs, étant connectés respectivement en parallèle et les fils de chacun des deux secteurs étant reliés en série aux fils de l'autre secteur.

Les fils de l'un des secteurs assurent la conduction de courant électrique dans un sens le long de la conduite tubulaire flexible, les fils de l'autre secteur assurant le retour du courant.

Les différents secteurs sont avantageusement séparés entre eux par des isolants, notamment sous la forme de joncs en matière élastomère ou plastomère disposés entre les fils conducteurs des différents secteurs, des joncs d'isolation complémentaires pouvant être disposés entre les conducteurs électriques à l'intérieur d'un même secteur électriquement conducteur. A la place des joncs, il est possible de prévoir des revêtements isolants des fils conducteurs d'extrémité des secteurs sur au moins leur face en regard du conducteur du secteur adjacent. Le nombre des joncs ou des revêtements isolants est néanmoins limité pour que la surface totale des fils conducteurs en contact avec la gaine sous-jacente soit supérieure à 30 % et de préférence supérieure à 50 % du périmètre de ladite gaine. Dans la pratique, il pourra être avantageusement de choisir une valeur supérieure à 70 % pouvant atteindre jusqu'à 90 %.

Dans une seconde variante de réalisation, il est prévu un premier secteur de fils alimentés en parallèle et réalisés en un même matériau conducteur et un second secteur constitué de fils alimentés en parallèle et réalisés en un second matériau conducteur.

Par un choix approprié des matériaux métalliques constitutifs des deux secteurs de fils conducteurs, il est possible d'optimiser le dimensionnement de la nappe chauffante et les caractéristiques de l'alimentation électrique compte-tenu des matériaux utilisables pour la réalisation des fils conducteurs.

La société déposante a trouvé que ce rendement était optimisé en utilisant des fils qui, présentant tous une même section, sont dans chacun des secteurs en un nombre $N_a$ et respectivement $N_b$ tel que :

$$N_a/N_b = \sqrt{a/b}$$

$\rho_a$ et $\rho_b$ étant les résistivités des matériaux constitutifs des fils des deux secteurs.

A titre de matériaux utilisables pour la réalisation des fils métalliques conducteurs des conduites selon l'invention, on peut citer l'acier au carbone, l'acier inoxydable, les alliages d'aluminium, le cuivre ou le laiton étant entendu que, comme cela vient d'être indiqué, ces matériaux peuvent être utilisés pour réaliser des secteurs en matériaux différents, des combinaisons acier au carbone/acier inoxydable ; acier/alliage d'aluminium ; alliage d'aluminium/laiton ; laiton/cuivre étant envisageables.

Dans une troisième variante de réalisation, tous les fils conducteurs de la nappe sont réalisés en un même matériau conducteur et sont tous disposés en parallèle, le retour du courant électrique étant réalisé par un conducteur électrique séparé.

Dans un second mode de mise en oeuvre, il est prévu deux nappes de fils conducteurs, disposées chacune entre deux gaines tubulaires souples de la conduite, chacune des nappes présentant un agencement tel que décrit ci-dessus et étant agencée de manière que les fils de l'une des nappes sont tous montés en parallèle et assurent la conduction électrique dans un sens le long de la conduite, les fils de l'autre nappe étant également montés en parallèle entre eux mais en série par rapport aux fils de la première nappe assurant le retour du courant.

Dans le cas d'une alimentation en courant alternatif triphasé, il est prévu dans un mode de réalisation de subdiviser une nappe unique de fils électriquement conducteurs en trois secteurs séparés par des moyens d'isolation, notamment des joncs plastiques ou élastomériques, les fils de chaque secteur étant montés en parallèle sur une phase de l'alimentation électrique.

Les fils électriquement conducteurs des nappes selon l'invention peuvent être enroulés en spires autour de l'axe de la conduite selon toute configuration souhaitée n'affectant pas les propriétés mécaniques de la conduite notamment sur le plan de la flexibilité, par exemple une configuration en "SZ", c'est-à-dire avec inversion périodique du sens de spiralage des fils, ou avantageusement une configuration en hélice autour de la conduite, les fils étant enroulés en hélices continues à pas constant.

Dans le cas où la conduite comporte comme armature de renforcement une armure résistant à la fois à la traction et aux efforts radiaux de la pression interne, composée par exemple de deux nappes croisées constituées chacune de fils disposés en hélice autour de la conduite avec un même angle d'armage de 55° par rapport à l'axe de la conduite, les fils des deux nappes étant enroulés avec des angles opposés par rapport à l'axe de la conduite, les fils constitutifs de la ou de chacune des nappes de fils de chauffage selon l'invention sont de préférence posés sur la gaine interne, à l'intérieur de ladite armure, enroulés en hélices continues présentant un angle d'armage inférieur à 55°, la différence entre cet angle et 55° pouvant être faible, par exemple de quelques degrés seulement.

De préférence, dans le cas où la conduite tubulaire flexible comporte une armure de résistance à la pression (voûte de pression) enroulée par spiralage, et, à l'extérieur de la voûte, une armure de résistance à la traction présentant un angle d'armage inférieur à 55°, les fils électriquement conducteurs sont posés entre la voûte de pression et l'armure de traction, avec une gaine intermédiaire de chaque côté et enroulés en hélices continues avec un angle d'armage supérieur à celui des armures de traction, la différence entre lesdits angles étant de préférence au moins égale à 10°.

Dans tous les cas, la température en cours d'utilisation des fils des nappes de chauffage reste relativement faible et de très peu supérieure à la température de la partie interne de la paroi de la conduite flexible, ainsi qu'à la température du fluide transporté, la différence pouvant être, normalement, inférieure à 1°C.

Il en résulte l'avantage que l'augmentation de température créée par effet Joule dans les fils conducteurs ne présente aucun risque de soumettre le matériau des gaines ou tubes plastiques présents dans la paroi de la conduite flexible à une température excessive.

En outre, cette propriété de la conduite flexible selon l'invention permet, à partir de la mesure des paramètres électriques d'intensité et/ou de différence de potentiel, de mesurer avec une grande précision et de façon continue, à chaque instant, la température du fluide transporté, y compris pendant la phase préliminaire transitoire de montée de température.

Dans le cas particulier, par exemple, d'alimentation en courant continu, la différence de potentiel étant fixée, la mesure de l'intensité permet de déterminer la valeur instantanée de la résistance électrique de la nappe de fils conducteurs, et par conséquent la valeur de la résistivité de ses fils, qui est elle-même fonction de la température actuelle des fils. La température des fils conducteurs étant très voisine, à chaque instant, de celle du fluide transporté, on peut donc directement convertir la mesure de l'intensité de courant en valeur de la température du fluide transporté, la précision de mesure ainsi obtenue pouvant être de l'ordre de 1°C.

Par gaines tubulaires souples selon l'invention, on entend les gaines en matière plastique ou élastomérique constituant la structure habituelle de la conduite flexible et/ou des gaines tubulaires supplémentaires mises en place dans le cadre de la mise en oeuvre de l'invention pour assurer l'isolation électrique au niveau de la ou des nappes de fils conducteurs, l'une au moins des gaines disposée à l'extérieur de la ou des nappes de fils conducteurs devant être étanche.

De plus par gaine selon l'invention, on entend non seulement une couche tubulaire mise en place de manière conventionnelle par extrusion mais une couche qui peut être mise en place de toute manière appropriée, notamment par rubanage.

La conduite tubulaire flexible selon l'invention peut avantageusement être munie à sa périphérie d'une structure d'isolation thermique évitant des déperditions vers l'extérieur de la chaleur dégagée par effet Joule, cette structure d'isolation pouvant par exemple être du type de celle décrite dans le brevet français FR-A 2 563 608 dont la société déposante est co-titulaire.

Dans le but de mieux faire comprendre l'invention, on va maintenant décrire à titre d'exemples nullement limitatifs différents modes de mises en oeuvre en se référant au dessin annexé dans lequel :

- la figure 1 est une vue partiellement en coupe et partiellement écorchée d'une structure de conduite selon l'invention,
- la figure 2 illustre un exemple de réalisation de nappe chauffante selon l'invention,
- la figure 3 est une vue en coupe d'un autre exemple de réalisation de conduite tubulaire flexible selon l'invention,
- les figures 4 à 6 illustrent des variantes de nappe chauffante selon l'invention,
- la figure 7 illustre de manière analogue à la figure 1 une autre structure de conduite selon l'invention à deux nappes de chauffage,
- la figure 8 illustre un exemple de réalisation de structure chauffante à deux nappes de fils conducteurs,
- les figures 9 et 10 sont des vues analogues aux figures 1 et 7 d'autres modes de réalisation de conduites tubulaires flexibles selon l'invention,

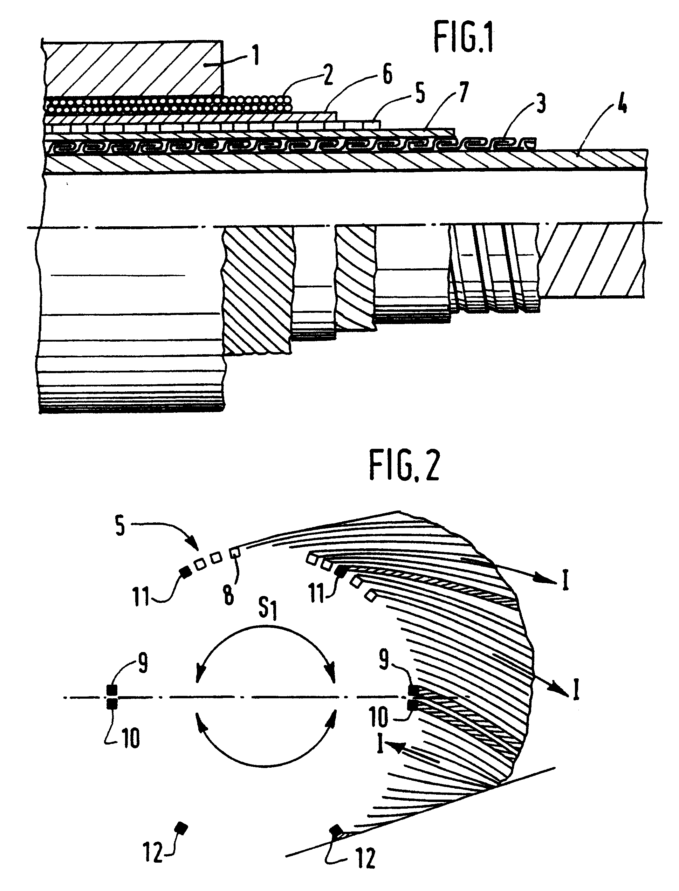

On a illustré à la figure 1 un exemple de conduite tubulaire flexible utilisable, notamment pour le transport de fluides sous pression tels qu'en particulier les hydrocarbures produits lors de l'exploitation de puits sous-marins.

La société déposante fabrique et commercialise en grande longueur de telles conduites qui présentent des caractéristiques mécaniques élevées, notamment de résistance à la traction, à l'écrasement et à la pression interne du fluide transporté.

La conduite illustrée à la figure 1 est du type "Smooth-bore" et comprend une gaine tubulaire externe souple 1 par exemple en matériau plastique tel qu'un polyamide, un polyéthylène ou une matière du groupe des PVDF ou en matériau élastomérique, constituant un revêtement extérieur de protection de la conduite ; une armure de résistance à la traction 2, constituée de deux nappes croisées constituées chacune de fils disposés en hélice autour de la conduite avec un même angle d'armage, les fils des deux nappes étant enroulés avec des angles opposés par rapport à l'axe de la conduite ; une armure de résistance à la pression 3 illustrée sous la forme d'une nappe de feuillard agrafé mais qui dans la pratique peut comprendre une ou plusieurs nappes de feuillard agrafé ou de fils profilés enroulés par spiralage sous un angle proche de 90° par rapport à l'axe de la conduite ; et un tube interne souple 4 en un matériau thermoplastique tel qu'un polyamide ou polyéthylène ou PVDF ou autre polymère.

De façon avantageuse, la gaine tubulaire externe souple 1 comprend une couche d'isolation thermique, par exemple un matériau plastique expansé, tel que de la mousse de PVC, cette couche étant de préférence encadrée par une gaine sous-jacente étanche en matériau plastique compact et la gaine de revêtement externe du flexible également étanche en matériau plastique compact.

Selon l'invention, il est prévu, entre l'armure de résistance à la traction 2 et l'armure de résistance à la pression 3, une nappe chauffante 5 interposée entre deux gaines tubulaires souples 6 et 7 qui peuvent être également réalisées en un matériau des mêmes groupes que le matériau des gaines tubulaires interne et externe, ou en tout matériau offrant des propriétés d'isolation électrique requises, par extrusion ou par enroulement de bandes.

Un exemple de réalisation de nappe chauffante 5 est illustré à la figure 2.

Cette nappe 5 est constituée d'une pluralité de fils métalliques conducteurs 8, de section rectangulaire dans l'exemple illustré, disposés côte à côte avec un certain jeu fonctionnel et divisés en deux secteurs semi-circulaires S1, S2 par des joncs isolants 9, 10 qui, dans la pratique, peuvent présenter la même section que les fils conducteurs.

Des joncs d'isolation intermédiaires 11, 12 peuvent être disposés entre des fils d'un même secteur.

Les joncs isolants 9, 10 ainsi que les joncs intermédiaires 11, 12 ont de préférence une épaisseur égale ou légèrement supérieure à celle des fils conducteurs, et peuvent avoir la même largeur unitaire que les fils conducteurs. Ils peuvent être réalisés en divers matériaux plastiques, tels que du polyamide, polyéthylène, polypropylène ou autre.

Comme schématisé par les flèches I sur le dessins, les fils du secteur S1 assurent la conduction dans un sens le long de la conduite, tandis que les fils du secteur S2 assurent la conduction dans l'autre sens.

A titre d'exemple, dans le cas d'un diamètre interne de la conduite de 203 mm et avec une isolation thermique extérieure épaisse de 24 mm, on obtient pour une conduite flexible telle que représentée aux figures 1 et 2, une différence de température de 50°C entre le milieu environnant (eau de mer, par exemple à 15°C) et le fluide transporté (pétrole brut maintenu à 65°C), avec une intensité de courant de 250A et une chute de tension de 392 mV par mètre de conduite.

Dans ce cas, on a adopté des fils conducteurs 8 en acier au carbone, de section rectangulaire aplatie de 6mm x 1,6mm au nombre de 60, armés selon un angle de 55°, avec un jeu latéral moyen de 5 %, l'angle d'armage des fils en acier constituant les deux nappes de l'armure 2 de résistance à la traction étant de 35°.

On peut ainsi assurer le maintien en température d'une longueur continue de canalisation de 5.000 m avec alimentation électrique sous une différence de potentiel de 1.960 volts, en raccordant l'une des extrémités du flexible à une source d'énergie électrique, par exemple située sur une plate-forme à la surface, ou par connexion sous-marine avec les conducteurs de raccordement reliés aux fils conducteurs de la conduite et qui sont montés dans l'embout d'extrémité et reliés à une prise extérieure étanche.

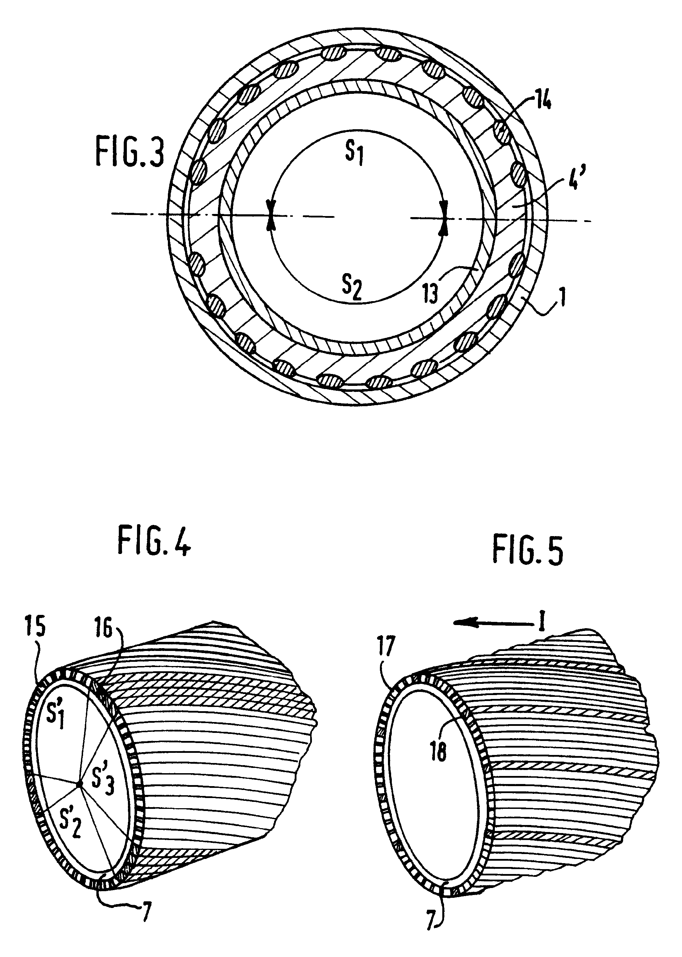

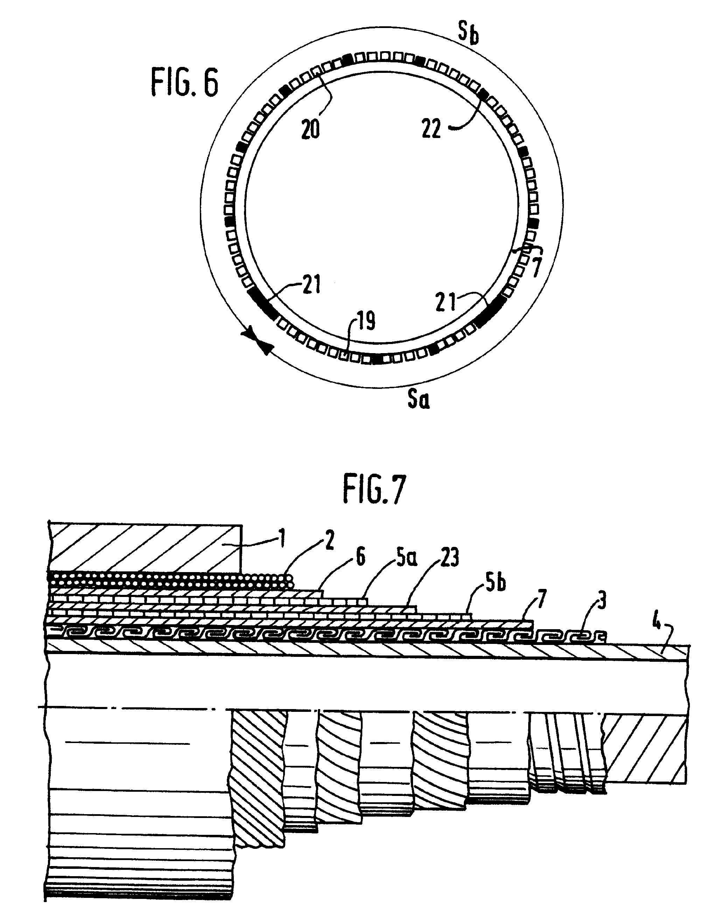

Avec une alimentation en courant électrique continu, il est également possible d'utiliser dans l'exemple de réalisation de la figure 1, les modes de réalisation de nappes chauffantes illustrés aux figures 5 et 6 qui seront décrits plus loin.

La figure 3 illustre une variante simplifiée de structure "Rough-bore" comportant une carcasse interne 13 constituée généralement par un enroulement hélicoïdal à faible pas, d'un ou plusieurs profilés agrafables, notamment de feuillard d'acier, cette carcasse étant destinée à empêcher l'écrasement de la conduite flexible et à protéger la gaine interne d'étanchéité vis-à-vis des agressions des produits transportés du risque d'implosion en cas de décompression rapide lors du transport de produits contenant du gaz, une gaine tubulaire souple interne 4' et une gaine externe tubulaire souple 1 qui peut être analogue à la gaine avec isolation thermique décrite en référence à la figure 1.

Dans ce mode de réalisation, les fils conducteurs 14 présentent une section sensiblement elliptique et sont logés à l'intérieur de rainures formées dans la périphérie de la gaine interne 4', sans toutefois de préférence être adhérisés à elle.

Dans cet exemple, les fils conducteurs 14 sont également disposés selon deux secteurs semi-circulaires S1 et S2, aucun jonc d'isolation supplémentaire n'étant prévu du fait de la disposition des fils conducteurs 14 par rapport aux gaines 1 et 4' entre lesquelles ils sont placés.

La figure 4 illustre un exemple de réalisation de nappe chauffante alimentée en courant triphasé dans lequel des fils conducteurs 15 qui peuvent présenter la même section que les fils conducteurs 8 de l'exemple de la figure 2, celle des fils 14 de l'exemple de la figure 3 ou toute section appropriée sont répartis en trois secteurs S'1, S'2, S'3 séparés par des groupes de joncs isolants 16, le mode de réalisation illustré comprenant quatre joncs isolants entre les fils conducteurs des trois secteurs, chacun des secteurs correspondant à une phase du courant. Du fait de l'alimentation en courant alternatif triphasé, aucun moyen de retour du courant n'est à prévoir, les trois secteurs de fils montés en parallèle S'1, S'2, S'3 étant connectés entre eux à l'extrémité de la conduite flexible opposée à l'extrémité par laquelle ils sont reliés à la source d'énergie électrique extérieure.

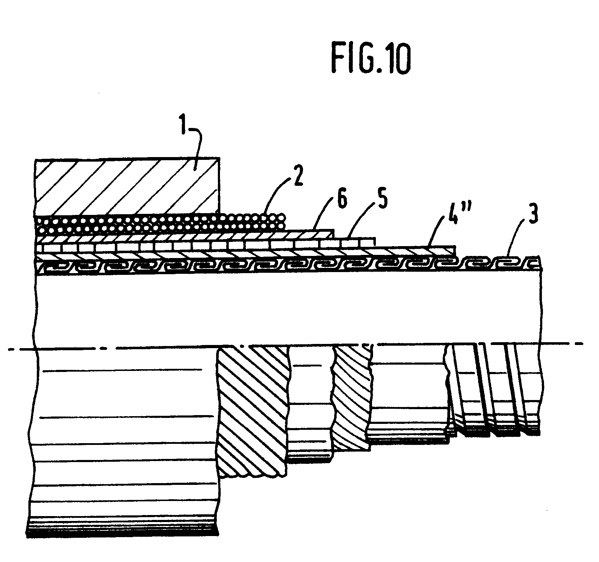

La nappe 5 formée par les trois secteurs de fils conducteurs 15 peut être disposée à l'intérieur de la structure flexible illustrée à la figure 10. Cette structure est du type "Rough Bore" et comprend une carcasse intérieure 13 telle que définie dans le cas de la figure 3, une gaine d'étanchéité interne 4" prenant appui sur la carcasse 13, et sur laquelle est posée la nappe 5 de fils conducteurs 15. La nappe chauffante 5 est séparée par une gaine intermédiaire 6 tubulaire souple des deux nappes d'armure 2 armées en sens opposés à 55° et assurant la résistance du flexible à la pression interne et aux efforts axiaux, la protection externe étant assurée par une gaine tubulaire externe souple 1 qui est avantageusement réalisée avec une couche d'isolation thermique.

Avec un diamètre intérieur de la conduite de 152 mm et une isolation thermique de gaine extérieure épaisse de 20 mm, on peut obtenir une différence de température de 50°C. Dans ce cas, il y a trois secteurs de 18 fils chacun, les fils étant en cuivre et de section rectangularie aplatie de 6mm x 1,6mm et armés selon un angle de 45°. Outre les trois groupes de quatre joncs isolants 16 entre les secteurs, il n'y a pas de jonc intermédiaire entre les différents fils de chacun des trois secteurs. L'intensité de courant consommée est de 451 A efficaces par phase, et on peut réaliser une conduite continue de 3.200 m avec une alimentation sous 380 V.

Le mode de réalisation de la figure 5 comprend des ensembles de fils conducteurs 17 alimentés en courant continu qui peuvent présenter la même section que ceux précédemment décrits ou toute autre section appropriée, divisés en groupes par des joncs isolants 18.

Dans ce mode de réalisation, tous les fils 17 sont reliés en parallèle et assurent la conduction du courant dans un seul sens sur la longueur de la conduite. Du fait de l'alimentation en courant continu, il est nécessaire de prévoir pour le retour du courant un conducteur supplémentaire (non représenté) indépendant de la structure de la conduite et monté en série avec les fils 17.

Dans le cas d'une structure Smooth-bore de diamètre intérieur de 203 mm et avec une isolation thermique de gaine extérieure épaisse de 24 mm, on obtient une différence de température de 50°C pour une intensité de courant de 500A. La chute de tension est alors de 196 mV par mètre de conduite, ce qui permet de réaliser une conduite continue longue de 10.000 m avec une différence de potentiel de 1960 V. Il y a dans ce cas 60 fils d'acier rectangulaires aplatis de 6 mm x 1,6 mm comme dans la figure 2, également armés à 55°.

Dans le mode de réalisation de la figure 6 correspondant également à une utilisation avec du courant continu, il est prévu deux secteurs Sa et Sb de fils conducteurs 19 et respectivement 20 de même section, les fils 19 et 20 étant réalisés en des matériaux métalliques différents. Les deux secteurs sont séparés par des ensembles de joncs isolants 21 et à l'intérieur d'un même ensemble, les fils conducteurs sont séparés à intervalles par des joncs isolants intermédiaires 22.

Dans le cas d'une structure Rough-Bore de diamètre intérieur 203 mm et avec une isolation thermique de gaine extérieure épaisse de seulement 12 mm, on obtient une différence de température de 50°C avec une intensité de 574 A et une chute de tension égale à 307 mV par mètre de conduite. Dans ce cas, le secteur Sa comprend 18 fils en cuivre et le secteur Sb comprend 46 fils en acier au carbone, tous les fils étant de section rectangulaire aplatie de 6mm x 1,6 mm, et armés à 40°, la structure d'armature de renforcement étant constitué par deux nappes de fils en acier armés en sens opposés à 55° (comme illustré à la figure 10). L'isolation entre les deux secteurs est assurée par deux groupes de joncs 21 de quatre joncs chacun, avec en outre neuf joncs intermédiaires 22 au total.

La conduite tubulaire flexible illustrée à la figure 7 est analogue à celle illustrée à la figure 1 mais comporte deux nappes de fils chauffants 5a et 5b entre lesquelles est disposée une gaine d'isolation supplémentaire 23.

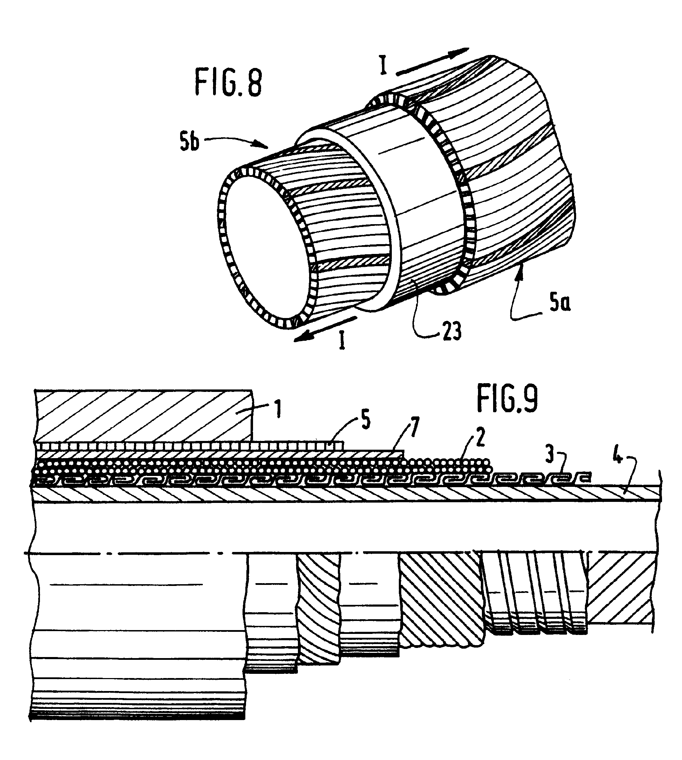

On voit sur la figure 8 une structure détaillée des deux nappes chauffantes qui sont ici chacune du même type que la nappe chauffante 5 illustrée à la figure 5.

Avec la même structure de diamètre intérieur de 203 mm et la même isolation thermique que pour la structure des figures 1 et 2, on obtient une différence de température de 50°C avec une intensité de courant de 385 A et une chute de tension égale à 285 mV par mètre de conduite. Dans ce cas il y a 62 fils conducteurs en acier et 6 joncs intermédiaires sur la nappe 5a, et 66 fils conducteurs en acier et 6 joncs intermédiaires sur la nappe 5b, les fils et les joncs présentant tous la même section rectangulaire aplatie de 6mm x 1,6 mm.

L'une des nappes chauffantes, avec une alimentation en courant continu, assure la conduction du courant dans un sens le long de la conduite, l'autre nappe assurant le retour du courant.

En variante, chacune des nappes 5a et 5b pourrait avoir la structure illustrée à la figure 2 (chaque nappe comprenant deux secteurs à sens de courant opposés et avec le même métal pour tous les fils), ou encore au moins l'une des deux nappes pourrait avoir la structure illustrée à la figure 6 (les fils d'un premier secteur assurant la conduction du courant dans un sens sont réalisés dans un premier métal, les fils du deuxième secteur assurant la conduction du courant dans l'autre sens étant réalisés dans un métal différent).

Le mode de réalisation de la figure 9 diffère essentiellement de celui illustré aux figures 1 et 2 par le fait que la nappe chauffante 5 disposée entre les gaines 1 et 7 se trouve à l'extérieur de l'armure de traction 2 alors qu'elle se trouvait à l'intérieur de celle-ci dans le mode de réalisation de la figure 1.

Avec un diamètre intérieur de la conduite de 152 mm et une isolation thermique de gaine extérieure de 24 mm, une intensité de courant continu de 95 A procure une différence de température de 50°C pour une chute de tension de 918 mV par mètre de conduite. On peut ainsi réaliser une conduite chauffante continue d'une longueur de 2000 m avec une alimentation sous 1836 V. Dans ce cas, il y a 54 fils conducteurs en acier inoxydable de section rectangulaire de 6 mm x 1,6 mm, armés à 55°, avec deux groupes de deux joncs isolants chacun pour séparer les deux secteurs et dix neuf joncs intermédiaires.

Dans tous les modes de réalisation, le jeu latéral entre les fils conducteurs disposés côte à côte en formant une ou plusieurs nappes correspond aux valeurs moyennes des distances libres entre fils adjacents dans le cas des nappes d'armure de résistance à la traction présentes dans les flexibles connus, en particulier lorsque ces fils de résistance à la traction sont des fils métalliques posés en hélice entre une couche interne et une couche externe sans être noyés dans un matériau élastomérique ou plastique, ce qui correspond, par exemple, au cas des flexibles à couches non liées (unbonded) du type fabriqué par la Société déposante. Ce jeu est déterminé, en particulier, de façon à ce que la conduite flexible conserve l'intégrité de sa résistance à la pression interne et aux autres efforts appliqués et de son endurance tout en présentant la flexibilité requise, et également en fonction des impératifs de fabrication. Le jeu latéral fonctionnel est, dans ces conditions, normalement compris entre 1 % et 20 %, et, de préférence, entre environ 3 % et 12 %, pouvant varier en fonction de l'angle d'armage (le jeu latéral est défini à partir de la valeur moyenne du rapport entre la largeur du fil et la largeur occupée par un fil).

Suite aux travaux qu'elle a consacrés à l'étude des structures des conduites flexibles, la société déposante a trouvé que ce jeu fonctionnel est tel qu'il permet d'éviter les zones de contact continu entre les conducteurs malgré les déformations imposées par les opérations de manutention et les conditions de travail en service de la conduite. On a constaté qu'avec les conduites tubulaires flexibles selon l'invention, on obtient ainsi une bonne circulation du courant électrique le long de chacun des fils conducteurs et ceci dans les diverses situations qui peuvent être imposées à la conduite tubulaire flexible en cours d'utilisation, notamment dans le cadre d'une exploitation pétrolière, malgré les opérations de manutention, et, en particulier, les conditions de pression interne, l'incurvation statique ou dynamique de la conduite, la charge axiale appliquée, les effets d'écrasement ainsi que les vibrations.

Ayant ainsi découvert que des fils analogues aux fils des nappes d'armure de résistance mécanique et disposés de façon semblable peuvent être utilisés efficacement comme conducteurs électriques pour chauffer la canalisation par effet Joule, et ayant trouvé par ailleurs qu'on peut ainsi réaliser l'optimisation des conditions de transmission de la chaleur émise ainsi que des caractéristiques d'alimentation électrique, il est donc devenu possible de réaliser les nappes de conducteurs chauffants en utilisant des éléments constitutifs et des méthodes d'armage analogues à ceux déjà pratiqués pour des armures de résistance mécanique, ce qui présente un double avantage :

    a) utilisation d'une technique éprouvée qui a montré sa très grande fiabilité, ce qui est particulièrement important dans le cas des flexibles à caractéristiques mécaniques élevées pour l'exploitation pétrolière en mer.

b) utilisation des mêmes moyens de production pour fabriquer les flexibles, les armeuses existantes pouvant être directement mises en oeuvre.

Dans tous les modes de réalisation, il est avantageux que l'ensemble d'armatures de renforcement soit réalisé de façon à pouvoir résister à toutes les composantes d'efforts appliqués à la conduite flexible, telles que les effets dus à la pression interne, les effets de charge axiale, de pression extérieure ou d'écrasement, de couple de torsion, et que la résistance à ces diverses composantes d'effort soit principalement assurée par l'ensemble d'armatures de renforcement, de sorte que la participation de la ou des nappes de fils conducteurs à la résistance aux efforts extérieurs soit relativement très faible, et ceci bien que lesdites nappes présentent des caractéristiques apparemment identiques à celles de certaines des nappes constituant les armatures de renforcement. Les contraintes de traction auxquelles peuvent se trouver soumis les fils conducteurs sont ainsi limitées à des valeurs relativement très faibles, de préférence ne dépssant pas 10% de leur limite élastique. On obtient un tel résultat en jouant sur la configuration générale de la structure de la conduite flexible, et sur les caractéristiques respectives de la ou des nappes de fils conducteurs et des diverses nappes d'armature de renforcement, en particulier, l'épaisseur des fils, les angles d'armage et, éventuellement, les modules d'Young respectifs des fils constituant les diverses nappes. Certaines dispositions générales de la structure de la conduite flexible, applicables à ce titre aux conduites avec armures à 55° et aux conduites avec voûte de pression, ont été décrites ci-dessus. Certains modèles de calcul existants, tels que ceux mis au point par la Société Déposante, permettent d'élaborer la définition d'une strucutre de flexible répondant aux conditions ci-dessus, et de vérifier que le niveau de contrainte dans les fils conducteurs est bien inférieur à la limite fixée dans chaque cas d'application.

Limiter ainsi les contraintes dans les fils conducteurs présente en particulier les deux avantages suivants :

a) supprimer le risque de rupture des fils conducteurs par dépassement de contrainte ou par fatigue. Il a en effet été trouvé que, dans le but de maintenir stables dans le temps les performances de la conduite flexible chauffante selon l'invention, il est important de s'assurer qu'il n'y a pas de risque de rupture de l'un des fils conducteurs.

b) Il est possible de réaliser indépendamment et dans les meilleures conditions l'optimisation des diverses caractéristiques des nappes de fils conducteurs : disposition et nombre des nappes, forme et dimensions des sections de fils conducteurs, angle d'armage, nature du matériau etc... alors que d'autres contraintes de dimensionnement auraient dû être prises en compte si les fils conducteurs avaient dû participer à la résistance mécanique de la conduite flexible. On obtient ainsi de meilleures performances techniques et des résultats économiques plus intéressants en séparant les rôles respectifs des nappes chauffantes et des nappes de résistance mécanique.

Selon l'invention et contrairement aux réalisations connues, il n'est pas nécessaire de prévoir des alimentations électriques séparées sur des tronçons de courte longueur de la conduite, la transmission du courant s'effectuant depuis la première extrémité du premier tronçon jusqu'à la dernière extrémité du deuxième tronçon sans nécessiter d'alimentation au niveau des raccordements des tronçons entre eux, ce qui permet de réaliser avec une seule alimentation électrique des longueurs de lignes importantes de plusieurs kilomètres.

Le diamètre intérieur des conduites flexibles selon l'invention peut être compris, typiquement, entre 20 mm et 500 mm, et des applications envisageables les plus courantes, peuvent correspondre à des diamètres variant de 60 mm à 300 mm, avec des pressions internes pouvant atteindre des valeurs élevées, de l'ordre de 100 à 1000 bars ou plus en fonction des diamètres.

## Revendications

1. Conduite tubulaire flexible pour le transport de fluides sous pression comportant une gaine tubulaire externe souple, un ensemble d'armatures de renforcement, un tube ou une gaine tubulaire interne souple, le cas échéant au moins une gaine tubulaire souple intermédiaire, et des moyens de chauffage sous la forme d'une pluralité de fils électriquement conducteurs (8,14,15,17,19,20) raccordés à une source d'énergie électrique et dégageant de la chaleur par effet Joule, lesdits fils conducteurs étant parallèles entre eux, enroulés en spires autour de l'axe de la conduite, et disposés selon au moins une nappe (5,5a,5b) entre deux gaines tubulaires souples de la conduite (6,7,1,4,4',4'',23), caractérisée par le fait que lesdits fils conducteurs sont non jointifs entre eux avec un jeu latéral entre les fils compris entre 1 et 20 %, de préférence entre 3 et 12 %, lesdits fils étant chacun en appui par un contact de surface sur une gaine tubulaire sous-jacente électriquement isolante (7,13,23).

2. Conduite selon la revendication 1, caractérisée par le fait que chacun des fils conducteurs (8,14,15,17,19,20) est un profilé métallique, de préférence de section pleine.

3. Conduite selon la revendication 2, caractérisée par le fait que chacun des fils conducteurs est un profilé métallique non gainé.

4. Conduite selon l'une quelconque des revendications 1 à 3, caractérisée par le fait que les fils électriques présentent une section polygonale, notamment rectangulaire aplatie.

5. Conduite selon l'une quelconque des revendications précédentes, caractérisée par le fait que l'alimentation des fils conducteurs s'effectue en courant continu.

6. Conduite selon la revendication 5, caractérisée par le fait qu'elle comporte une nappe unique (5) de fils conducteurs.

7. Conduite selon la revendication 5, caractérisée par le fait qu'elle comporte au moins une nappe (5) subdivisée en deux secteurs (S1,S2) de fils réalisés en un même matériau conducteur et de même section, les secteurs s'étendant chacun sensiblement sur 180°, les fils de chacun des secteurs étant disposés respectivement en parallèle et les fils de chacun des deux secteurs étant reliés en série aux fils de l'autre secteur.

8. Conduite selon la revendication 5, caractérisée par le fait qu'elle comporte au moins une nappe subdivisée en un premier secteur (Sa) de fils alimentés en parallèle et réalisés en un même matériau conducteur et un second secteur (Sb) constitué de fils alimentés en parallèle et réalisés en un second matériau conducteur.

9. Conduite selon la revendication 8, caractérisée par le fait que le nombre Na et respectivement Nb des fils des deux secteurs (Sa) et respectivement (Sb) est tel que :

$$Na/Nb = \sqrt{\rho a/\rho b}$$

ρa et ρb étant les résistivités des matériaux constitutifs des fils des deux secteurs.

10. Conduite selon l'une quelconque des revendications 1 à 4, caractérisée par le fait qu'elle comprend au moins une nappe (17) de fils conducteurs et que tous les fils conducteurs de la ou des nappes sont réalisés en un même matériau conducteur et sont tous disposés en parallèle, le retour du courant électrique étant réalisé par un conducteur électrique séparé.

11. Conduite selon l'une quelconque des revendications 1 à 4, caractérisée par le fait qu'elle comprend deux nappes de fils conducteurs (5a, 5b) disposées chacune entre deux gaines tubulaires souples de la conduite, les fils de l'une des nappes étant tous montés en parallèle et assurant la conduction électrique dans un sens le long de la conduite, les fils de l'autre nappe étant également montés en parallèle entre eux mais en série par rapport aux fils de la première nappe et assurant le retour du courant.

12. Conduite selon l'une quelconque des revendications 1 à 4, caractérisée par le fait que l'alimentation électrique des fils conducteurs de la conduite s'effectue en courant alternatif triphasé, la conduite comportant une nappe unique de fils électriquement conducteurs (15) subdivisée en trois secteurs (S'1,S'2, S'3), les fils de chaque secteur étant montés en parallèle sur une phase de l'alimentation électrique.

13. Conduite selon l'une quelconque des revendications 7 à 9 et 12, caractérisée par le fait que les différents secteurs (S1,S2 ; Sa,Sb ; S'₁,S'₂,S'₃) sont séparés entre eux par des isolants, notamment sous la forme de joncs (9,10,16,21) en matière élastomère ou plastomère disposés entre les fils conducteurs des différents secteurs.

14. Conduite selon l'une quelconque des revendications précédentes, caractérisée par le fait que des isolants, notamment sous la forme de joncs en matière élastomère ou plastomère (11,12,19,22) sont disposés entre des fils ou des groupes de fils conducteurs assurant la conduction dans un même sens.

15. Conduite selon l'une quelconque des revendications précédentes, caractérisée par le fait que les fils conducteurs sont enroulés en spires autour de l'axe de la conduite avec une configuration en hélice, les fils étant enroulés en hélices continues à pas constant.

16. Conduite selon l'une quelconque des revendications précédentes, caractérisée par le fait que les fils conducteurs de la ou desdites nappes sont agencés de manière que les contraintes mécaniques induites dans lesdits fils par les efforts imposés à la conduite soient faibles.

17. Conduite selon l'une quelconque des revendications précédentes dans laquelle l'ensemble d'armatures de renforcement comporte une armure formée de fils disposés en hélice autour de la conduite avec un même angle d'armage de 55° par rapport à l'axe de la conduite, caractérisée par le fait que les fils de la ou des nappes de chauffage sont posés sur la gaine interne de la conduite, à l'intérieur de ladite armure, et enroulés en hélices continues présentant un angle d'armage inférieur à 55°.

18. Conduite selon l'une quelconque des revendications 1 à 16, dans laquelle l'ensemble d'armatures de renforcement comporte une armure de résistance à la pression enroulée par spiralage et, à l'extérieur de ladite armure de résistance à la pression, une armure de résistance à la traction formée de fils présentant un angle d'armage inférieur à 55°, caractérisée par le fait que les fils de la ou desdites nappes de chauffage sont posés entre lesdites armures, avec interposition de gaines intermédiaires et enroulés en hélices continues avec un angle d'armage supérieur à celui des fils de l'armure de résistance à la traction, la différence entre lesdits angles étant de préférence au moins égale à 10°.

19. Conduite selon l'une quelconque des revendications précédentes, caractérisée par le fait que la température desdits fils est maintenue à une valeur relativement faible et de très peu supérieure à la température de la partie interne de la paroi de la conduite flexible.

20. Conduite selon l'une quelconque des revendications précédentes, caractérisée par le fait que les fils de la ou desdites nappes de chauffage sont utilisés pour la mesure de la température du fluide transporté.

21. Conduite selon l'une quelconque des revendications précédentes, caractérisée par le fait qu'elle comporte au moins une couche d'isolation thermique extérieure.

**Patentansprüche**

1. Rohrförmige flexible Leitung für den Transport unter Druck stehender Fluide, mit einem nachgiebigen, rohrförmigen Außenmantel, einer Anordnung von Verstärkungsbewehrungen, einem nachgiebigen, rohrförmigen Innenschlauch oder -mantel, gegebenenfalls mindestens einem nachgiebigen, rohrförmigen Zwischenmantel und mit Heizeinrichtungen in Form mehrerer elektrisch leitender Drähte (8, 14, 15, 17, 20), die mit einer elektrischen Energiequelle verbunden sind und Joulesche Wärme abgeben, welche leitenden Drähte zueinander parallel sind, spiralförmig um die Achse der Leitung gewunden sind und in Form mindestens einer Schale (5, 5a, 5b) zwischen zwei nachgiebigen, rohrförmigen Mänteln der Leitung (6, 7, 1, 4, 4', 4", 23) angeordnet sind, **dadurch gekennzeichnet,** daß die leitenden Drähte nicht dicht aneinander grenzen, mit einem seitlichen Spiel zwischen den Drähten zwischen 1 und 20 %, vorzugsweise zwischen 3 und 12 %, wobei jeder der Drähte mit einem darunter liegen-

den, elektrisch isolierenden, rohrförmigen Mantel (7, 13, 23) in Oberflächenkontakt steht.

2. Leitung nach Anspruch 1, **dadurch gekennzeichnet,** daß jeder der leitenden Drähte (8, 14, 15, 17, 19, 20) ein Metallprofil mit vorzugsweise vollem Querschnitt ist.

3. Leitung nach Anspruch 2, **dadurch gekennzeichnet,** daß jeder der leitenden Drähte ein nicht ummanteltes Metallprofil ist.

4. Leitung nach einem der Ansprüche 1 bis 3, **dadurch gekennzeichnet,** daß die elektrischen Drähte polygonalen Querschnitt, insbesondere breiten, rechteckigen Querschnitt aufweisen.

5. Leitung nach einem der vorstehenden Ansprüche, **dadurch gekennzeichnet,** daß die Versorgung der leitenden Drähte über Gleichstrom erfolgt.

6. Leitung nach Anspruch 5, **dadurch gekennzeichnet,** daß sie eine einzige Schale (5) aus leitenden Drähten aufweist.

7. Leitung nach Anspruch 5, **dadurch gekennzeichnet,** daß sie mindestens eine Schale (5) aufweist, die in zwei Sektoren (S1, S2) von Drähten unterteilt ist, die aus demselben leitenden Material mit demselben Querschnitt bestehen, wobei die Sektoren sich jeweils im wesentlichen über 180° erstrekken, die Drähte jedes Sektors jeweils parallel angeordnet sind und die Drähte jedes der zwei Sektoren in Reihe mit den Drähten des anderen Sektors verbunden sind.

8. Leitung nach Anspruch 5, **dadurch gekennzeichnet,** daß sie mindestens eine Schale aufweist, die in einen ersten Sektor (Sa) aus parallel versorgten Drähten, die aus demselben leitenden Material bestehen, und einen zweiten Sektor (Sb) unterteilt ist, der aus parallel versorgten Drähten aus einem zweiten leitenden Material gebildet wird.

9. Leitung nach Anspruch 8, **dadurch gekennzeichnet,** daß die Anzahl Na bzw. Nb der Drähte der zwei Abschnitte (Sa) bzw. (Sb) dergestalt ist, daß folgendes gilt:

$$Na/Nb = \sqrt{\rho a/\rho b},$$

wobei $\rho a$ und $\rho b$ die spezifischen Widerstände der Materialien sind, die die Drähte der zwei Sektoren bilden.

10. Leitung nach einem der Ansprüche 1 bis 4, **dadurch gekennzeichnet,** daß sie mindestens ei-

ne Schale (17) leitender Drähte aufweist und daß alle leitenden Drähte der Schale oder der Schalen aus demselben leitenden Material bestehen und alle parallel angeordnet sind, wobei die Rückleitung des elektrischen Stroms über einen getrennten elektrischen Leiter erfolgt.

11. Leitung nach einem der Ansprüche 1 bis 4, **dadurch gekennzeichnet,** daß sie zwei Schalen (5a, 5b) leitender Drähte aufweist, die jeweils zwischen zwei nachgiebigen, rohrförmigen Mänteln der Leitung angeordnet sind, wobei die Drähte der einen der Schalen alle parallel angeordnet sind und für elektrische Leitung in Längsrichtung der Leitung sorgen und die Drahte der anderen Schale ebenfalls parallel zueinander angeordnet sind, jedoch in Reihe mit den Drähten der ersten Schale, wobei sie für die Rückführung des Stroms sorgen.

12. Leitung nach einem der Ansprüche 1 bis 4, **dadurch gekennzeichnet,** daß die elektrische Versorgung der leitenden Drähte der Leitung durch Dreiphasen-Wechselstrom erfolgt und daß die Leitung eine einzige Schale elektrisch leitender Drähte (15) aufweist, die in drei Sektoren (S'$_1$, S'$_2$, S'$_3$) unterteilt ist, wobei die Drähte jedes Sektors parallel für eine Phase der elektrischen Versorgung angebracht sind.

13. Leitung nach einem der Ansprüche 7 bis 4 und 12, **dadurch gekennzeichnet,** daß die verschiedenen Sektoren (S$_1$, S$_2$; Sa, Sb; S'$_1$, S'$_2$, S'$_3$) voneinander durch Isolierungen insbesondere in Form von Stäben (9, 10, 16, 21) aus elastomerem oder plastomerem Material getrennt sind, die zwischen den leitenden Drähten der verschiedenen Sektoren angeordnet sind.

14. Leitung nach einem der vorstehenden Ansprüche, **dadurch gekennzeichnet,** daß Isolierungen, insbesondere in Form von Stäben aus elastomerem oder plastomerem Material (11, 12, 19, 22) zwischen Drähten oder Gruppen von leitenden Drähten angeordnet sind, um Leitung in einer Richtung zu gewährleisten.

15. Leitung nach einem der vorstehenden Ansprüche, **dadurch gekennzeichnet,** daß die leitenden Drähte spiralförmig, mit Wendelform um die Achse der Leitung gewunden sind, wobei die Drähte als kontinuierliche Wendel mit konstanter Ganghöhe gewunden sind.

16. Leitung nach einem der vorstehenden Ansprüche, **dadurch gekennzeichnet,** daß die leitenden Drähte der Schale oder der Schalen so ausgebildet sind, daß die mechanischen Spannungen, die in diesen Drähten durch die auf die Leitung wirkenden Kräfte hervorgerufen werden, schwach sind.

17. Leitung nach einem der vorstehenden Ansprüche, bei der die Anordnung der Verstärkungsbewehrungen eine Bewehrung aufweist, die aus Drähten besteht, die wendelförmig mit demselben Bewehrungswinkel von 55° in bezug auf die Leitungsachse um die Leitung herum angeordnet sind, **dadurch gekennzeichnet,** daß die Drähte der Heizschale oder der Heizschalen auf den Innenmantel der Leitung, im Inneren der genannten Bewehrung aufgelegt sind und sie als kontinuierliche Wendeln gewunden sind, die einen Bewehrungswinkel unter 55° bilden.

18. Leitung nach einem der Ansprüche 1 bis 16, bei der die Anordnung der Verstärkungsbewehrungen eine spiralförmig gewundene, druckfeste Bewehrung und, im Inneren dieser druckfesten Bewehrung, eine zugfeste Bewehrung aufweist, die aus Drähten besteht, die einen Bewehrungswinkel unter 55° bilden, **dadurch gekennzeichnet,** daß die Drähte der Heizschale oder Heizschalen zwischen den genannten Bewehrungen angeordnet sind, wobei Zwischenmäntel eingefügt sind, die als kontinuierliche Wendeln gewunden sind, mit einem Bewehrungswinkel über demjenigen der Drähte der zugfesten Bewehrung, wobei der unterschied zwischen den genannten Winkeln vorzugsweise mindestens 10° beträgt.

19. Leitung nach einem der vorstehenden Ansprüche, **dadurch gekennzeichnet,** daß die Temperatur der Drähte auf einem relativ kleinen Wert gehalten wird, der nur wenig über der Temperatur des Innenteils der Wand der flexiblen Leitung liegt.

20. Leitung nach einem der vorstehenden Ansprüche, **dadurch gekennzeichnet,** daß die Drähte der Heizschale oder der Heizschalen zum Messen der Temperatur des transportierten Fluids verwendet werden.

21. Leitung nach einem der vorstehenden Ansprüche, **dadurch gekennzeichnet,** daß sie mindestens eine thermisch isolierende Außenschicht aufweist.

## Claims

1. A flexible tubular conduit for the transport of fluids under pressure comprising a flexible outer tubular sheath, a group of strengthening reinforcements, a flexible inner tubular sheath or a tube, and if applicable at least one intermediate flexible tubular sheath, and heating means in the form of electrically conductive wires (8,14,15,17,19,20) arranged to be connected to an electric power source and releasing heat by Joule effect, said conductive wires being parallel to one another, spirally wound around the axis of the conduit, and arranged in at least one layer (5,5a,5b) placed between two flexible tubular sheaths of the conduit, (6,7,1,4,4′,4″,23), characterized in that said electrically conductive wires are noncontiguous to one another with a lateral play in the range of 1% to 20% preferably in the range of 3% to 12% between adjacent wires, and each of said wires rests by surface contact on an underlying tubular electrically insulating sheath (7,13,23).

2. A conduit according to claim 1, characterized in that each of the electrically conductive wires (8,14,15,17,19,20) is a metal shape having preferably a solid section.

3. A conduit according to claim 2, characterized in that of the conductive wires is a nonsheathed metal shape.

4. A conduit according to any one of claims 1 to 3, characterized in that the electrically conductive wires exhibit a polygonal section, especially a flattened rectangular cross-section.

5. A conduit according to any one of the preceding claims, characterized in that the power source for the electrically conductive wires is a direct current source.

6. A conduit according to claim 5, characterized in that there is a single layer (5) of conductive wires.

7. A conduit according to claim 5, characterized in that it comprises at least one layer (5) subdivided into two sectors (S1,S2) of wires made of the same conductive material and of the same section, the two sectors each extending approximately over 180°, the wires of each of the sectors being arranged respectively in parallel and the wires of each of the two sectors being connected in series to the wires of the other sector.

8. A conduit according to claim 5, characterized in that it comprises at least one layer subdivided into a first sector (Sa) of wires supplied in parallel and made of the same conductive material and a second sector (Sb) consisting of wires supplied in parallel and made of a second conductive material.

9. A conduit according to claim 8, characterized in that the number Na and respectively the number Nb of the wires of two sectors (Sa) and respectively (Sb) is such that:
$$Na/Nb = \rho a/\rho b$$
$\rho a$ and $\rho b$ being the resistivities of the constituent materials of the wires of the two sectors.

10. A conduit according to any one of claims 1 to 4 characterized in that it comprises at least one layer (17) of conductive wires and all the conductive wires of the layer or layers are made of the same conductive material and are all arranged in parallel, the return of the electric current being performed by a separate electric conductor.

11. A conduit according to any one of claims 1 to 5, characterized in that it comprises two layers of conductive wires (5a,5b) each placed between two flexible tubular sheats of the conduit, the wires of one of the layers being all assembled in parallel and providing the electric conduction in one direction along the conduit, the wires of the other layer also being assembled in parallel to one another but in series in relation to the wires of the first layer and providing the return of the current.

12. A conduit according to any one of claims 1 to 4, characterized in that the electric power source of the conductive wires of the conduit occurs in treephase alternating current, the conduit comprising a single layer of electrically conductive wires (15) subdivided into three sectors (S′1,S′2,S′3), the wires of each sector being mounted in parallel on one phase of the electric supply.

13. A conduit according to any one of claims 7 to 9 and 12, characterized in that the various sectors (S1,S2;Sa,Sb;S′1,S′2,S′3) are separated from one another by insulators especially in the form of elastomer or plastomer rods (9,10,16,21) placed between the conductive wires of the different sectors.

14. A conduit according to any one of the preceding claims, characterized in that insulators, especially in the form of elastomer or plastomer rods (11,12,19,22) are placed between wires or groups of conductive wires providing conduction in the same direction.

15. A conduit according to any one of the preceding claims, characterized in that the conductive wires are spirally wound around the axis of the conduit with a spiral configuration, the wires being wound in continuous spirals with a constant pitch.

16. A conduit according to any one of the preceding claims, characterized in that the conductive wires of the layer or layers are made so that the mechanical stresses induced in said wires by the forces imposed on the conduit are slight.

17. A conduit according to any one of the preceding claims, in which the group of strengthening reinforcements comprises a weave made of wires arranged spirally around the conduit with the same winding angle of 55° relative to the axis of the conduit, characterized in that the wires of the heating layer or layers are placed on the inner sheath of the conduit, inside said weave and wound in continuous spirals exhibiting a winding angle less than 55°.

18. A conduit according to any one of claims 1 to 16, in which the group of strengthening reinforcements comprises a weave for compressive strength wound by spiralling, and, on the outside of said weave for compressive strength, a weave for tensile strength formed by wires exhibiting a winding angle less than 55°, characterized in that the wires of said heating layer or layers are placed between said weaves, with interposition of intermediate sheaths and wound in continuous spirals with a winding angle greater than that of the wires of the weave for tensile resistance, the difference between said angles being preferably at least equal to 10°.

19. A conduit according to any one of the preceding claims, characterized in that the temperature of said wires is kept at a relatively small value and very slightly greater than the temperature of the internal part of the wall of the flexible conduit.

20. A conduit according to any one of the preceding claims, characterized in that the wires of said heating layer or layers are used to measure the temperature of the transported fluid.

21. A conduit according to any one of the preceding claims characterized in that it comprises at least one outside thermal insulation layer.

# FIG.1

# FIG.2

EP 0 483 337 B1

FIG.3

14

4'

S₁

S₂

13

1

FIG.4

FIG.5

15  16

S'₁

S'₃

S'₂

7

I

17

18

7

15

FIG. 6

FIG.7

FIG.8

5b

I

I

23

5a

FIG.9

1

5

7

2

3

4

# FIG.10